**Europäisches Patentamt**

**European Patent Office**

**Office européen des brevets**

(19)

(11) Veröffentlichungsnummer: **0 052 816**
**B1**

(12)

# EUROPÄISCHE PATENTSCHRIFT

(45) Veröffentlichungstag der Patentschrift:
**16.01.85**

(51) Int. Cl.⁴: **B 62 K 19/04**

(21) Anmeldenummer: **81109470.5**

(22) Anmeldetag: **31.10.81**

(54) **Fahrradrahmen.**

(30) Priorität: **21.11.80 DE 3043931**

(43) Veröffentlichungstag der Anmeldung:
**02.06.82 Patentblatt 82/22**

(45) Bekanntmachung des Hinweises auf die Patenterteilung:
**16.01.85 Patentblatt 85/3**

(84) Benannte Vertragsstaaten:
**AT BE CH DE FR GB IT LI LU NL SE**

(56) Entgegenhaltungen:
**CH - A - 134 512**
**CH - A - 224 334**
**FR - A - 909 163**
**US - A - 2 250 805**

(73) Patentinhaber: **Klose, Odo, Prof., Am Freudenberg 19,
D-5600 Wuppertal 1 (DE)**

(72) Erfinder: **Klose, Odo, Prof., Am Freudenberg 19,
D-5600 Wuppertal 1 (DE)**

(74) Vertreter: **Rieder, Hans-Joachim, Dr. et al,
Corneliusstrasse 45 Postfach 11 04 51,
D-5600 Wuppertal 11 (DE)**

ACTORUM AG

**Beschreibung**

Die Erfindung bezieht sich auf einen Fahrradrahmen, bestehend aus zwei kongruenten, im Abstand zueinander angeordneten und miteinander verbundenen Einzelrahmen, die sich aus einem vorderen und rückwärtigen Rahmenteil zusammensetzen, wobei der vordere Rahmenteil gebildet ist von einem Lenkgabelkopf rückwärts gerichtet zur Sattelhalterung verlaufenden oberen Rahmenschenkel und dem Lenkgabelkopf zum Tretlager abwärts gerichtet verlaufenden unteren Rahmenschenkel, während der rückwärtige Rahmenteil gebildet ist von einem im Anschluss an das Tretlager nach rückwärts und ansteigend verlaufenden Abschnitt, der zusammen mit dem auf das Tretlager zulaufenden Rahmenschenkel ein strumpfwinkliges V bildet und in seiner Endzone eine Hinterrad-Achsenaufnahme aufweist, und einem aufwärts ansteigenden Abschnitt, der bis in den Bereich der Sattelhalterung läuft und wobei im Bereich der Sattelhalterung der vom Gabelkopf kommende Rahmenschenkel und der aufwärts ansteigende Abschnitt durch ein Zwischenstück starr miteinander verbunden sind, dessen Längserstreckung auf das Tretlager zugerichtet ist.

Ein Fahrrad dieser Gattung ist durch die FR-A 872 372 bekannt. Das Sattelhalterohr der Sattelhalterung wird dort zwischen den als Zwischenstück bezeichneten Abschnitten des Rahmens gefasst, läuft aber bis zum Tretlager durch und ist daran befestigt. Der Fahrradrahmen wird dadurch, wie im klassischen Rahmenbau üblich, versteift. Dies ist nachteilig und führt vor allem zu einer harten Fahrweise und bei Extrembelastungen ungünstigstenfalls zu Rahmenbruch. Durch die CH-A 224 334 ist dagegen ein aus zwei kongruenten, jedoch elliptischen Einzelrahmen gebildeter Fahrradrahmen bekannt, bei dem eine solche versteifende Mittelstütze fehlt. Der Rahmen ist dadurch zwar hoch federelastisch; er nimmt die über die Radgabeln und den Sattel einfliessenden Kräfte nachgiebig auf, gerät aber in Eigenschwingungen bzw. starke Vibration. Stossbewegungen bei Fahrt, wie sie im Falle starrer Rahmen mit einer von der Sattelhalterung zum Tretlager führenden Strebe stark auftreten können, werden sicherlich gemindert. Auch lässt sich wohl die Gefahr eines Rahmenbruchs ausschliessen. Die reine Ellipsenform des Rahmens ist aber auch insofern ungünstig, als die Hinterrad-Achsenaufnahme in der Scheitelzone der Parabel liegt und das Tretlager am Fuss derselben (unten) bzw. im Übergangsbereich zur anderen, mit ihrem Scheitel in Fahrtrichtung liegenden Parabel; stärkere Federungen würden also den Achspunkt des Tretlagers und den der Hinterradachse gegeneinander bewegen. Die Antriebskette würde so einmal gespannt und einmal in einen lockeren Zustand treten. Das dürfte der Fahrpraxis abträglich sein.

Aufgabe der Erfindung ist es, einen gattungsgemässen Fahrradrahmen hoher Rahmenstabilität federungstechnisch zu optimieren, ohne dass lagerbildende Rahmenabschnitte in diese Federung in der geschilderten Weise einbezogen werden.

Gelöst ist diese Aufgabe durch die im Anspruch 1 angegebene Erfindung.

Der Unteranspruch ist eine vorteilhafte Weiterbildung des erfindungsgemässen Fahrradrahmens.

Zufolge solcher Ausgestaltung ist ein hoch stabiler, federungsgünstiger Fahrradrahmen geschaffen. Die dem vorderen und rückwärtigen Rahmenteil innewohnenden, elastischen Rückstellkräfte sind von dem sich frei vom Tretlager erstreckenden Zwischenstück aufgenommen. Hieraus resultiert ein erhebliches Stabilitätsmoment. Es kann leichterer Werkstoff zur Anwendung kommen, dies bei weiter verringertem Rahmenschenkelquerschnitt. Das ist vor allem für Rennräder von grosser Bedeutung. Der praktisch selbst federungsneutrale Parabelscheitel bildet den Lenkgabelkopf. Die Federung ist nun auf bestimmte Partien des in sich geschlossenen Rahmens begrenzt; sie tritt kontrollierter auf. Auf die Sattelhalterung selbst werden keine Biegekräfte übertragen; sie erstreckt sich in der Hauptbelastungsrichtung, also im wesentlichen vertikal; ihre Festlegung erfolgt praktisch in einer bewegungsneutralen, d. h. selbst nicht verbiegbaren Zone am Zwischenstück, an das die eigentlichen, nunmehr lokalisierten Biegezonen nach vorne (vorderer Rahmenteil) und nach hinten (hinterer Rahmenteil) verlaufend anschliessen. Insgesamt sind drei solche biegeneutrale Zonen bildende Rahmenabschnitte erzielt, die sich im wesentlichen gleichmässig am Rahmenumfang verteilen: Parabelscheitel, Satteltragstangenbereich, Tretlagerbereich. Der Befestigungsbereich für die Sattelhaltestange ist in jedem Falle ausreichend, da ihre Länge sich nach dem Höhenverstellbereich des Sattels richtet, der in der Regel bei ca. 15 cm liegt zuzüglich einer verbleibenden Führungslänge. Die winkelförmige Einziehung des oberen Rahmenschenkels ist insofern begrenzt, aber trotzdem so tief, dass eine Annäherung an das Profil eines Damenfahrradrahmens vorliegt. Andererseits ist die Einziehung auch wiederum nicht so tief, dass es sich um ein reines Damenrad handelt, wodurch ein solches Fahrrad auch noch als Herrenrad durchgeht. Der auf bestimmte Zentren begrenzte Federungskomfort ist somit an beiden Rahmentypen realisiert. Dies ist auch im Hinblick auf die gegenüber der Gattung abweichende Lösung gemäss CH-A 224 334 wichtig. Diesem Vorläufer gegenüber ist durch die Massnahme, dass der Verlauf zwischen Hinterrad-Achsaufnahme und dem zum Zwischenstück aufwärts ansteigenden Abschnitt als mit seinem Scheitel nach rückwärts gerichteter Bogen realisiert ist, der Nachteil behoben, dass der die Antriebsmittel enthaltende Bereich des Rahmens in die Federung miteinbezogen wird. Der relativ biegefreudige Bogen setzt nämlich erst im Anschluss an die in der Regel laschenversteifte Hinterradachsen-Aufnahme an. Eine solche bogenförmige Schleife bringt nicht nur ein Mehr an Federungsmaterial, sondern gleichzeitig den Vorteil der Lokalisierung des Federungsbereichs. Ausserdem lässt sich durch den relativ weit nach hinten ausladenden Bogen ein entsprechend weit nach hinten gerückter Stützbereich für einen etwaigen Gepäckträger nutzen. Dort führt sonst eine zusätzliche, vom Hinterrad-Lagerbereich ausgehende Strebe hin.

Der Gegenstand der Erfindung ist nachstehend anhand zweier zeichnerisch veranschaulichter Ausführungsbeispiele näher erläutert. Es zeigt:

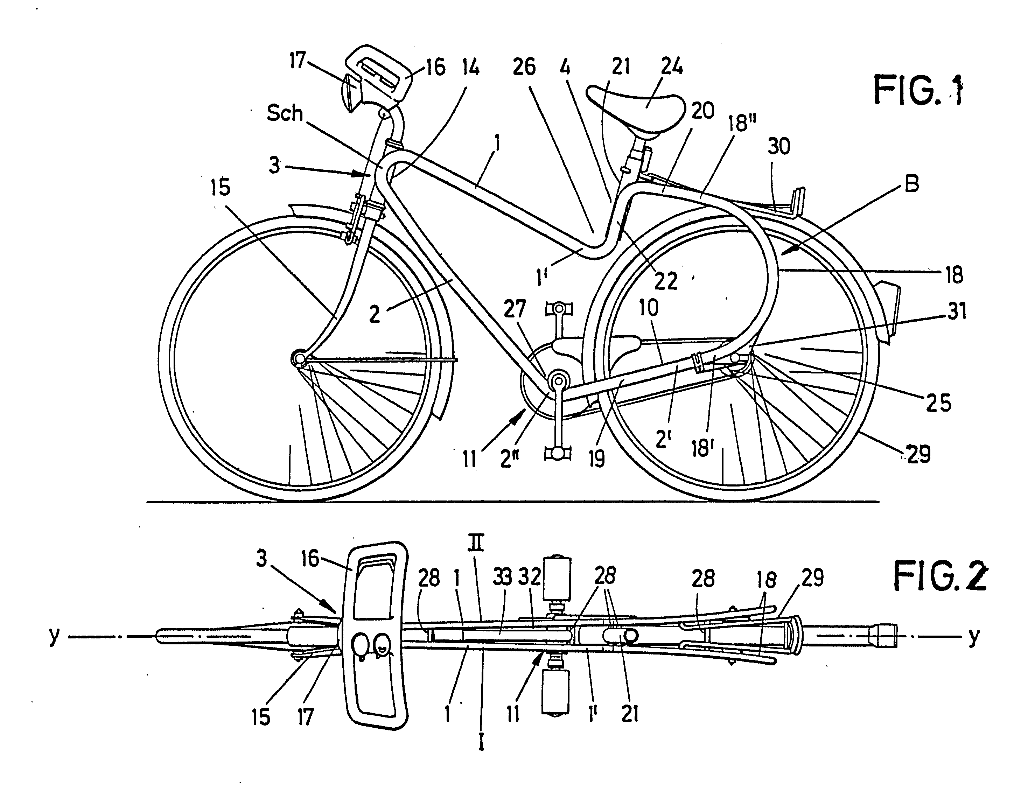

Fig. 1 ein den erfindungsgemäss ausgebildeten Fahrradrahmen aufweisendes Fahrrad in Seitenansicht,

Fig. 2 die Draufsicht hierzu,

Fig. 3 den Rahmen in Einzeldarstellung unter gleichzeitiger Verdeutlichung der entspannten Grundform und

Fig. 4 den Schnitt gemäss Linie IV–IV in Fig. 3.

Der parabelförmig gebogene, in Fahrtrichtung liegende Fahrradrahmenabschnitt des aus einem vorderen und rückwärtigen Rahmenteil gebildeten Fahrradrahmens besitzt einen oberen und einen unteren Rahmenschenkel 1 bzw. 2. Der Parabelscheitel Sch liegt im Bereich des Lenkgabelkopfes 3. Der relativ eng gekrümmte Scheitelbereich ist mit einer den Stiel einer Lenkgabel 15 aufnehmenden Lagerbüchse 14 verbunden und somit versteift. Die demgegenüber federfähigen Rahmenschenkel 1, 2 werden entgegen ihrer biegungselastischen Rückstellkraft gegeneinander verspannt. Diese Verspannungsstellung wird von einer praktisch eine Sehne bildenden Brücke B gesichert. Die Spannrichtung ist im wesentlichen vertikal. Die Brücke B ist als mit seinem Scheitel nach rückwärts gerichteter Bogen 18 gestaltet. Der Krümmungsbereich des Bogens 18 ist ebenfalls entgegen seiner Biegungselastischen Rückstellkraft in Richtung einer Verkleinerung des Krümmungsradius' gebogen und greift an den freien Enden 1', 2' der Rahmenschenkel 1, 2 an. Auch hier ist die Spannrichtung vertikal liegend.

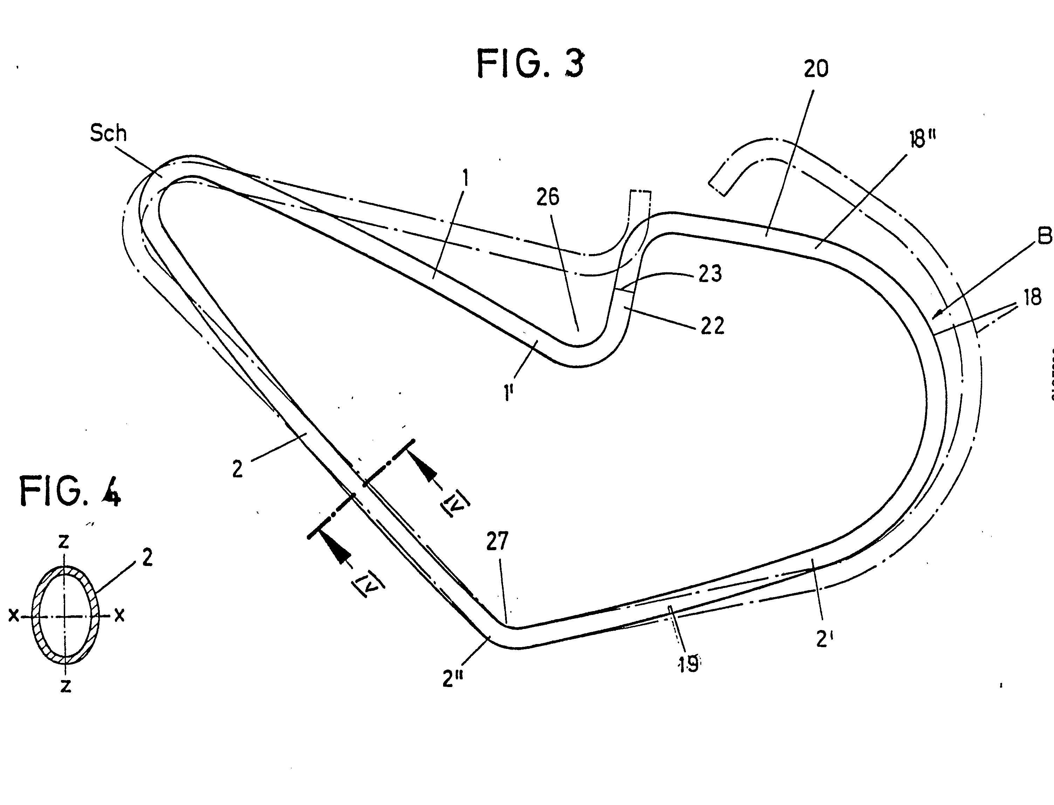

Der somit zwei Haupt-Spannbereiche aufweisende Rahmen ist, wie aus Fig. 3 ersichtlich, einstückig aus einem abgelängten Rohrabschnitt realisierbar, indem der untere Rahmenschenkel 2 sich im Bereich eines Tretlagers 11 in einen schräg aufwärts gerichteten Abschnitt 19 fortsetzt, der in das eine Bogenende 18' übergeht. Das andere Bogenende 18" ist im Bereich einer Sattelhalterung durch ein in Richtung der Satteltragstange 21 verlaufendes Zwischenstück 22 mit dem oberen Rahmenschenkel 1 starr verbunden. Die Übergänge zum Zwischenstück 22 sind jeweils eng gerundet. Rahmenschenkel 2 und Abschnitt 19 formen ein stumpfwinkliges V als dritten, etwa horizontal orientierten Spannbereich (siehe Fig. 3, strichpunktierte Darstellung als plastische Verformung). Der V-Scheitel ist mit 2" bezeichnet. Die in durchgehenden Linien ausgeführte Stellung gibt die elastische Verformung wieder. Die Hauptbelastungszentren sind Sattelbereich und Tretlagerbereich.

Die Verbindungsstelle liegt im Bereich des Zwischenstücks 22 und trägt das Bezugszeichen 23.

Die in dieser Weise am parabelförmigen Fahrradrahmen-Abschnitt angreifende Brücke B ist weniger eine in sich starre Sehne, sondern mehr eine flexible Brücke. Über den Sattel 24 einfliessende schlagartige Belastungen werden nach Überschreiten des Vorspannwertes, d.h. der elastischen Verformung, daher federnd aufgenommen.

Das Zwischenstück 22 bildet zusammen mit dem Ende 1' des oberen Rahmenschenkels 1 und dem Bogen 18, genauer dem Abschnitt 20 des Bogens, einen etwa Z-förmigen Verlauf. Der vom Abschnitt 20 gebildete Z-Schenkel ist nach oben hin schwach gewölbt. Der Z-Steg als Zwischenstück 22 weist nach unten in Richtung des Tretlagers 11; der vom Gabelkopf 3 ausgehende obere Rahmenschenkel 1 weist im wesentlichen in Richtung der Hinterrad-Achsaufnahme 25 der Hinterradgabel 10. Die hierdurch gebildete kehlenartige Einsenkung 26 des Fahrradrahmens erleichtert das Aufsteigen.

Eine am unteren Rahmenschenkel 2 verwirklichte, durch eine enge Rundung dieses Abschnittes gebildete Kehle 27 nimmt das Tretlager 11 auf; sie bildet eine günstige Montageorientierung, wenn dort die Tretlagerbüchse befestigt, insbesondere angeschweisst wird. Die entsprechende Tretlagerbüchse übernimmt dabei eine Doppelfunktion insofern, als sie bei Bildung des Rahmens aus zwei nebeneinanderliegenden, durch Distanzstege 28 miteinander verbundenen Einzelrahmen I, II ebenfalls einen Distanzweg bildet. Eine entsprechende Funktion übernimmt auch die Lagerbüchse 14 für die Lenkgabel 15.

Wie Fig. 2 entnehmbar, vergrössert sich der Abstand zwischen den beiden Einzelrahmen I, II zum rückwärtigen Rahmenende hin, und zwat in einem Mass, welches die Unterbringung des Hinterrades 29 ermöglicht. Der im rückwärtigen Rahmenende im Bereich der Brücke B liegende Distanzsteg 28 stützt einen frei nach rückwärts ragenden Gepäckträger 30 ab, welcher aus einem U-förmigen Bügel gebildet ist, dessen Enden an den Innenseiten der Einzelrahmen I, II starr oder gegebenenfalls auch gelenkig angreifen. Die Befestigungsenden sind in entgegengesetzte Richtungen nach auswärts gebogen. Dem Gepäckträger 30 können gepäcksichernde Mittel zugeordnet sein.

Die Hinterrad-Achsenaufnahme 25 ist als am unteren, bodenseitigen Ende des Bogens 18 angeschweisste Flanschplatte 31 gestaltet mit dem entsprechenden Einsteckschlitz für die dortige Radachse.

Als rahmenbildendes Material ist Rohr verwendet, dessen elliptischer oder flach-runder Querschnitt in Fig. 4 wiedergegeben ist. Bei Rahmenbildung wird so vorgegangen, dass die kürzere Ellipsenachse x–x quer zur Rahmenebene y–y verläuft. Diese Ebene bildet zugleich die Symmetrieachse des Fahrrades.

Der Abstand zwischen den Einzelrahmen I, II ist in der vorderen Zone so gehalten, dass in seinen Zwischenraum 32 noch eine Luftpumpe 33 eingesetzt werden kann. Letztere ist dadurch stossgeschützt untergebracht, zumal die längere Ellipsenachse z–z etwa dem Durchmesser des rohrförmigen Pumpengehäuses entspricht. Die Distanzstege 28 können dort so gelegt sein, dass sie als Pumpenhalterung dienen.

Der Gabellenkzapfen geht nach oben hin in eine Halterung für einen rahmenförmigen Fahrradlenker 16 über. Die aus Fig. 2 besonders deutlich hervorgehende Rahmenform bringt drei verschiedene Greifmöglichkeiten, und zwar einmal an den beiden parallelen Rahmenlängsschenkeln und einmal an den im wesentlichen in Fahrtrichtung orientierten kürzeren Rahmenschenkeln. Der Fahrradlenker 16 nimmt noch die üblichen Funktionselemente auf, wie Klingel, Gangsschalteinrichtung, einen Bremsgriff sowie ein integriertes Fahrradlampengehäuse 17.

## Patentansprüche

1. Fahrradrahmen, bestehend aus zwei kongruenten, im Abstand zueinander angeordneten und miteinander verbundenen Einzelrahmen (I, II), die sich aus einem vorderen und rückwärtigen Rahmenteil zusammensetzen, wobei der vordere Rahmenteil gebildet ist von einem vom Lenkgabelkopf (3) rückwärts gerichtet zur Sattelhalterung (4) verlaufenden oberen Rahmenschenkel (1) und vom Lenkgabelkopf (3) zum Tretlager (11) abwärts gerichtet verlaufenden unteren Rahmenschenkel (2), während der rückwärtige Rahmenteil gebildet ist von einem im Anschluss an das Tretlager (11) nach rückwärts und ansteigend verlaufenden Abschnitt (19), der zusammen mit dem auf das Tretlager (11) zulaufenden Rahmenschenkel (2) ein stumpfwinkliges V bildet und in seiner Endzone (2') eine Hinterrad-Achsenaufnahme (25) bildet und einem aufwärts ansteigenden Abschnitt (20), der bis in den Bereich der Sattelhalterung (4) läuft und wobei im Bereich der Sattelhalterung (4) der vom Gabelkopf (3) kommende Rahmenschenkel (1) und der aufwärts ansteigende Abschnitt (20) durch ein Zwischenstück (22) starr miteinander verbunden sind, dessen Längserstreckung auf das Tretlager (11) zugerichtet ist, dadurch gekennzeichnet, dass dem vorderen und rückwärtigen Rahmenteil innewohnende, elastische Rückstellkräfte von dem sich frei vom Tretlager (11) erstreckenden Zwischenstück (22) aufgenommen sind und der Verlauf zwischen Hinterrad-Achsaufnahme (25) und dem zum Zwischenstück (22) aufwärts ansteigenden Abschnitt (18″) als mit seinem Scheitel nach rückwärts gerichteter Bogen (18) realisiert ist.

2. Fahrradrahmen nach Anspruch 1, dadurch gekennzeichnet, dass die Satteltragstange (21) sich etwa über die ganze Länge des Zwischenstücks (22) erstreckt.

## Claims

1. Bicycle frame consisting of two congruent individual frames (I, II) which are arranged at a distance from one another and are connected to one another and which are composed of a front frame part and a rear frame part, the front frame part being formed by an upper frame leg (1), extending rearwards from the steering-fork head (3) to the saddle mounting (4), and by a lower frame leg (2) extending downwards from the steering-fork head (3) to the pedal bearing (11), whilst the rear frame part is formed by a section (19) which, adjoining the pedal bearing (11), extends rearwards and upwards and which forms, with the frame leg (2) running to the pedal bearing (11), an obtuse-angled V and forms in its end zone (2') a rear-wheel axle receptacle (25), and by a section (20) extending upwards and running into the region of the saddle mounting (4), and, in the region of the saddle mounting (4), the frame leg (1) coming from the fork head (3) and the section (20) extending upwards being connected rigidly to one another by means of an intermediate piece (22), the longitudinal extension of which is directed towards the pedal bearing (11), characterised in that elastic restoring forces inherent in the front and rear frame parts are absorbed by the intermediate piece (22) extending free of the pedal bearing (11), and the path between the rear-wheel axle receptacle (25) and the section (18″) extending upwards to the intermediate piece (22) takes the form of an arc (18) with its vertex directed backwards.

2. Bicycle frame according to Claim 1, characterised in that the saddle support rod (21) extends approximately over the entire length of the intermediate piece (22).

## Revendications

1. Cadre de bicyclette constitué par deux cadres séparés (I, II), congruents, disposés à une certaine distance l'un de l'autre, et reliés ensemble, qui se composent d'une partie avant et d'une partie arrière de cadre, où la partie avant du cadre est formée par un côté (1) supérieur s'étendant de la tête (3) de la fourche directrice vers l'arrière, dirigé vers le fixation de la selle (4), et d'un côté inférieur (2) de cadre, s'étendant, dirigé vers le bas, de la tête (3) de la fourche directrice vers le palier de pédalier (11), pendant que la partie arrière du cadre est formée par une section (19) s'étendant vers l'arrière en se raccordant au palier (11) du pédalier et en remontant, cette section formant, en commun avec le côté (2) du cadre arrivant au palier (11) de pédalier, un V en angle obtus, et formant dans sa zone terminale (2') la réception d'un axe de roue arrière (25), et une section (20) remontant vers le haut, qui s'étend jusque dans la zone de la fixation de la selle (4), et où, dans la zone de la fixation de la selle (4), le côté (1) du cadre venant de la tête (3) de la fourche et la section montante (20) sont reliées rigidement ensemble par une pièce intermédiaire (22), dont l'extension longitudinale est dirigée vers le palier de pédalier (11), cadre caractérisé en ce que les forces de rappel élastiques, inhérentes à la partie avant et à la partie arrière du cadre, sont absorbées par la pièce intermédiaire (22), qui s'etend librement du palier du pédalier (11), et le trajet entre la réception (25) de l'axe de la roue arrière et la section (18″) montant vers le haut vers la pièce intermédiaire (22) est réalisé sous la forme d'un arc (18) dont le sommet est dirigé vers l'arrière.

2. Cadre de bicyclette suivant la revendication 1, caractérisé en ce que la barre (22) qui porte la selle s'étend sensiblement sur toute la longueur de la pièce intermédiaire (22).

FIG.1

17 16 14 26 4 21 24

Sch

3

15

1

20 18" 30

B

1'

22

10

18

31

27

2'

25

11 2" 19 18'

29

2

0052816

FIG.2

II

3 16 28 1 33 32 28 28 18 29

y — — — — y

15 17 1 11 1' 21

I

# FIG. 3

# FIG. 4